Europäisches Patentamt

European Patent Office

Office européen des brevets

(11) Veröffentlichungsnummer : **0 014 382**
**B1**

(12) **EUROPÄISCHE PATENTSCHRIFT**

(45) Veröffentlichungstag der Patentschrift :
22.09.82

(51) Int. Cl.³ : **C 01 G 49/06, C 09 C 1/24,
H 01 F 1/11, H 01 F 1/36**

(21) Anmeldenummer : 80100343.5

(22) Anmeldetag : 23.01.80

(54) Plättchenförmige Eisenoxidpigmente und Verfahren zu deren Herstellung sowie deren Verwendung.

(30) Priorität : 07.02.79 DE 2904491

(43) Veröffentlichungstag der Anmeldung :
20.08.80 (Patentblatt 80/17)

(45) Bekanntmachung des Hinweises auf die Patenterteilung : 22.09.82 Patentblatt 82/38

(84) Benannte Vertragsstaaten :
BE DE FR GB IT NL SE

(56) Entgegenhaltungen :
DE - C - 891 902
FR - A - 2 067 276
US - A - 3 382 174
US - A - 3 864 463

CHEMICAL ABSTRACTS, Band 84, Nr. 18,
3. Mai 1976, Seite 131, Nr. 124052x Columbus,
Ohio, USA
JOURNAL OF APPLIED CHEMISTRY OF THE
U.S.S.R., Band 48, 14. November 1975,
(Consultants Bureau) New York, USA.
T.V. KALINSKAYA et al. : « Influence
of certain cations on the physico-chemical and
pigment properties of γ-ferric oxide »
US - A - 4 108 787
CHEMICAL ABSTRACTS, Band 83, Nr. 14, 6.
Oktober 1975, Seite 175, Nr. 117166p Columbus,
Ohio, USA &
JP - A - 7 444 878
(TEIKOKU KAKO LTD. ; Agency of Industrial
Sciences and Technology) 30-11-1974

(73) Patentinhaber : BAYER AG
Zentralbereich Patente, Marken und Lizenzen
D-5090 Leverkusen 1, Bayerwerk (DE)

(72) Erfinder : Franz, Gerhard, Dr.
Bodelschwinghstrasse 22
D-4150 Krefeld (DE)
Erfinder : Hund, Franz, Dr.
Scheiblerstrasse 89
D-4150 Krefeld (DE)

Imprimerie Jouve, 18, rue St-Denis, 75001 Paris, France

# 0 014 382

## Plättchenförmige Eisenoxidpigmente und Verfahren zu deren Herstellung sowie deren Verwendung

Hexagonale, plättchenförmige Eisenoxide wurden bereits für viele Anwendungsgebiete eingesetzt. Liegen die Oxide in der Kristallstruktur des Hämatit vor, werden diese als Rotfarbpigmente und Korrosionsschutzpigmente eingesetzt. Es wurde auch bereits vorgeschlagen, plättchenförmige Eisenoxide in der Kristallstruktur des Magnetit oder Maghemit als Magnetpigmente in magnetischen Aufzeichnungsträgern einzusetzen. Magnetitpigmente finden auch Anwendung als Schwarzfarbpigmente.

Die Eigenschaften der Farb-, Korrosionsschutz- und Magnetpigmente sind sehr wesentlich durch die geometrische Form der Einzelteilchen bestimmt. Der Einsatz von plättchenförmigen Eisenoxiden ist u.a. dadurch begrenzt, daß die geometrische Form der Teilchen durch deren Herstellungsverfahren bestimmt ist. Insbesondere lassen sich nach den bekannten Herstellungsverfahren das Schichtdickenwachstum und das Wachstum in der Plättchenebene nicht getrennt steuern. Wenn auch eine gewisse Variation der äußeren geometrischen Form der Eisenoxidteilchen durch Variation einzelner Parameter eines Herstellungsverfahrens oder durch Anwendung sehr unterschiedlicher Herstellungsverfahren möglich sein kann, werden doch durch jedes Herstellungsverfahren andere spezifische Eigenschaften wie Porosität, Defektstruktur, Verunreinigungen usw. beeinflußt, wodurch bestimmte Anwendungen wiederum begrenzt oder ausgeschlossen werden.

Ein Verfahren zur Herstellung plättchenförmiger Eisenoxide ist zwar aus der FR-A-2 067 276 bekannt, doch genügen die danach erhaltenen Teilchen nicht den an magnetische Eisenoxidpigmente gestellten Forderungen.

Es besteht daher ein erhebliches Interesse der Technik, plättchenförmige Eisenoxidteilchen herzustellen, deren gecmetrische Form, d.h. deren Verhältnis von Plättchendurchmesser zu Plättchendicke von dem angewandten Herstellungsverfahren weitgehend unabhängig ist.

Es wurde nun gefunden, daß solche neuen Eisenoxidpigmente erhalten werden, wenn während des Wachstums der Kristalle bestimmte, erfindungsgemäße, die Kristalltracht beeinflussende Substanzen anwesend sind, die im wesentlichen homogen in den Kristall eingebaut werden.

Gegenstand der vorliegenden Erfindung sind daher hexagonale, plättchenförmige Eisenoxidteilchen, enthaltend 0,1 bis 12 Gew.-% mindestens eines der Oxide der Elemente der IV., V. und/oder VI. Haupt- und/oder Nebengruppe und/oder der II. Nebengruppe des Periodensystems der Elemente.

Vorzugsweise enthalten die erfindungsgemäßen Eisenoxidteilchen Oxide der Elemente Silicium, Germanium, Zink, Titan, Zirkon oder Phosphor. Besonders bevorzugt sind solche Eisenoxidteilchen, die 0,1 bis 9 Gew.-% $SiO_2$ enthalten. Im allgemeinen sind Gehalte zwischen 0,1 bis 1 Gew.-%, oft auch zwischen 0,2 bis 0,8 Gew.-% der Modifizierungssubstanz ausreichend.

Die erfindungsgemäßen plättchenförmigen Eisenoxidteilchen können Durchmesser zwischen 0,5 und 100 µ aufweisen, wobei das Verhältnis zwischen Durchmesser und Dicke der Teilchen zwischen 4 und 200, bevorzugt zwischen 10 und 100 liegt. Bevorzugte Teilchengeometrien werden durch die jeweils beabsichtigte Anwendung bestimmt. Zum Beispiel werden als Magnetpigmente vorzugsweise solche mit einem Durchmesser unterhalb 10 µ und einem Verhältnis von Durchmesser zu Dicke zwischen 10 und 50 eingesetzt. Rotfarbpigmente können je nach Teilchengeometrie zwischen bläulichen bis gelblichen Rottönen mit mehr oder weniger ausgeprägtem Metallglanz erhalten werden.

Gegenstand der vorliegenden Erfindung ist auch das Verfahren zur Herstellung von hexagonalen, plättchenförmigen Eisenoxidteilchen, das dadurch gekennzeichnet ist, daß während des Wachstums der Eisenoxidteilchen oder von gleichgestaltigen Vorläuferkristallteilchen Verbindungen von mindestens einem der Elemente der IV., V. und/oder VI. Haupt- und/oder Nebengruppe und/oder II. Nebengruppe des Periodensystems der Elemente anwesend sind.

Das erfindungsgemäße Verfahren kann analog zu allen bekannten Verfahren zur Herstellung plättchenförmiger Eisenoxidteilchen ausgestaltet werden. Zum Beispiel kann ein Verfahren gemäß US-A-3 864 463 eingesetzt werden, bei dem die Eisenoxidteilchen durch thermische Spaltung von $FeCl_3$ mit Sauerstoff erhalten werden. Die die Kristalltracht beeinflussenden Modofizierungssubstanzen werden dann als flüchtige Verbindungen (z.B. Silane) zusammen mit dem Sauerstoff oder dem Chlor eingeleitet. Allerdings sind die Produkte für die Anwendung in Korrosionsschutzanstrichen wegen ihres Chloridgehaltes weniger geeignet.

Das erfindungsgemäße Verfahren findet seine bevorzugte Ausgestaltung durch die Anwendung hydrothermaler Verfahren, z.B. gemäß FR-A 638 200 oder DE-C-541 768.

Das bevorzugte Verfahren zur Herstellung von Eisen(III)-oxid-Pigmenten mit hexagonaler, plättchenförmiger Gestalt der Einzelteilchen besteht darin, daß geeignete Eisenverbindungen in wäßriger Suspension in einem Autoklaven oder Rohrreaktor auf Temperaturen erhitzt werden, die oberhalb der Temperatur liegen, bei der eben eine vollständige Umwandlung der eingesetzten Eisen(III)-Verbindung zu $\alpha$-$Fe_2O_3$ erfolgt, wobei ferner während der hydrothermalen Behandlung in der wäßrigen Suspension Verbindungen mindestens eines der Elemente der IV., V. und/oder VI. Haupt- und/oder Nebengruppe und/oder II. Nebengruppe des Periodensystems der Elemente in Mengen von 0,05 bis 20 Gew.-%, bezogen auf den Eisengehalt der Suspension, zugegen sind.

Die erhaltenen plättchenförmigen Eisenoxidpigmente haben die Kristallstruktur des Hämatit und können in bekannter Weise durch Reduktion und Reoxidation in Magnetit- bzw. Maghemit-Pigmente

2

überführt werden.

Als für das Verfahren geeignete Eisenverbindungen sind amorphe Eisen(III)-hydroxide die bei der Hydrolyse von beliebigen Eisen(III)-salzen oder von Eisen(II)-salzen in Gegenwart geeigneter Oxidationsmittel entstehen, und Eisen(III)-oxidhydroxide beliebiger Kristallmodifikation ($\alpha$-, $\beta$-, $\gamma$-, $\delta$-, $\varepsilon$-FeOOH) zu nennen. Daneben können natürlich auch andere Eisenverbindungen Verwendung finden, die sich unter den angewendeten hydrothermalen Bedingungen zu den genannten Hydroxiden oder Oxidhydroxiden oder direkt zu Hämatit umwandeln. Bevorzugt geht man von technisch leicht zugänglichen Eisen(III)-oxidhydroxidschlämmen aus, die beispielsweise bei der Oxidation von Schrott mit Luft in sauren wäßrigen Lösungen oder bei der Reduktion organischer Nitroverbindungen mit metallischem Eisen anfallen.

Die Konzentration der Eisenverbindung in der Suspension kann in weiten Grenzen verändert werden, wobei die Begrenzung nach unten letztlich nur durch die Wirtschaftlichkeit des Verfahrens gegeben ist. Nach oben sind den Feststoffgehalten der Suspension Grenzen durch die stark ansteigenden Viskositäten gesetzt, die eine homogene Durchmischung unmöglich machen, was sich naturgemäß in einer Qualitätsverschlechterung der Produkte bemerkbar macht.

Der pH-Wert der Suspension vor der hydrothermalen Behandlung wird in bekannter Weise entsprechend dem gewünschten Teilchendurchmesser der herzustellenden Hämatitkristalle eingestellt.

So erhält man in stark alkalischen Suspensionen Teilchen mit Durchmessern im Bereich von einigen Mikrometern, wohingegen in neutralen oder sauren Medien nur sehr viel feinteiligeres Produkt mit Größen unter einem Mikrometer herstellbar ist. Die Einstellung des pH-Wertes erfolgt in an sich bekannter Weise mit Alkalihydroxid, -oxid oder -carbonat, bevorzugt mit Natronlauge, wenn alkalische Suspension en erforderlich sind, oder aber für saure Suspensionen mit Mineralsäuren, bevorzugt mit Schwefelsäure.

Die Teilchengröße der herzustellenden Plättchen wird ferner durch die Partikelgröße der eingesetzten Eisenverbindung bestimmt. Die Plättchen sind um so größer, je feinteiliger die eingesetzte Eisenverbindung ist.

Die bei der hydrothermalen Behandlung minimalen Temperaturen, die für eine vollständige Überführung der eingesetzten Eisen(III)-verbindung notwendig sind, liegen immer über 100 °C und richten sich ansonsten nach Art und Menge der Eisen(III)-verbindung, nach Art und Menge der zusätzlich in der Suspension vorhandenen Ionen, dem pH-Wert der Suspension und nach der Reaktionsdauer. Nach oben sind die Temperaturen nur durch apparative Bedingungen begrenzt. Von technischem Interesse ist der Temperaturbereich unter dem kritischen Punkt der eingesetzten Lösung, d.h. im allgemeinen unter 374 °C, da anderenfalls unnötig hohe Drücke im Autoklav oder Rohrreaktor entstünden, die einer einfachen technischen Durchführung im Wege stünden.

Als Verbindungen von Elementen der IV., V. und/oder VI. Haupt- und/oder Nebengruppe und/oder II. Nebengruppe des Periodensystems werden bevorzugt Verbindungen von Silicium, Germanium, Zink, Titan, Zirkon oder Phosphor eingesetzt. Dabei kann es sich um beliebige Verbindungen handeln, wobei diese lediglich nicht bei den gewählten Versuchbedingungen mit der eingesetzten Eisenverbindung unter Bildung unlöslicher Ferrite reagieren sollen. Die Verbindungen können in der Suspension gelöst sein oder in Form feiner Teilchen vorliegen.

Besonders bevorzugt werden siliciumhaltige Substanzen eingesetzt. Dies kann als feinteiliges Siliciumdioxid, als Silikat beliebiger Kationen, als Ester oder in Form anderer Verbindungen der Kieselsäure, wie z.B Silikone, die in wäßrigen Medien bei erhöhter Temperatur hydrolysieren, in die Suspension eingeführt werden.

Im allgemeinen sind Mengen zwischen 0,1 und 10 Gew.-%, berechnet als Oxid der jeweiligen Verbindung, bezogen auf den Eisengehalt der Suspension, ausreichend. Besonders bevorzugt werden diese, die Kristalltracht beeinflussenden Substanzen, in Mengen zwischen 0,2 und 2 Gew.-% Oxid, bezogen auf den Eisengehalt der Suspension, eingesetzt.

Die Gegenwart der Elemente der IV., V. und/oder VI. Haupt- und/oder Nebengruppe und/oder der II. Nebengruppe des Periodensystems der Elemente während der hydrothermalen Behandlung beeinflußt das Dickenwachstum der plättchenförmigen Hämatitkristalle. Bei nahezu konstantem, durch die sonstigen Verfahrensparameter, wie die eingesetzten Ausgangssubstanzen, wie Temperatur, gegebenenfalls sonstige Verunreinigungen, sowie insbesondere durch den pH-Wert vorgegebenem Durchmesser der Teilchen besteht ein monotoner, nahezu linearer Zusammenhang zwischen der Dicke der Teilchen und der Menge der in das Teilchen schließlich eingebauten, die Kristalltracht beeinflussenden Substanz, wobei die Plättchen um so dünner sind, je mehr von der Substanz eingebaut wurde.

Die verschiedenen, die Kristalltracht beeinflussenden Substanzen haben eine unterschiedliche Wirkung bezüglich der Änderung der Plättchendicke. Diese Wirkung ist auch abhängig von den sonstigen Verfahrensparametern. Zum Beispiel hat ein $SiO_2$-Gehalt in den Hämatitplättchen im Alkalischen einen größeren Einfluß auf die Plättchendicke als im sauren Bereich. Andere Kristalltracht beeinflussende Modifizierungssubstanzen zeigen im sauren eine stärkere Wirkung als im alkalischen, wie z.B. Phosphat.

Der quantitative Einfluß auf die Plättchendicke ist also im Einzelfall jeweils für die vorgegebenen sonstigen Verfahrensparameter durch Vorversuche zu ermitteln und danach Menge und Art des Kristalltrachtmodifizierungsmittels zur Erreichung eines bestimmten Verhältnisses zwischen Durchmesser und Dicke der Plättchen zu ermitteln.

**0 014 382**

Die notwendigen Reaktionszeiten der hydrothermalen Behandlung sind sowohl von der Zusammensetzung der eingesetzten Suspension als auch von den äußeren Bedingungen der diskontinuierlichen oder kontinuierlichen hydrothermalen Behandlung, wie beispielsweise der Aufheizzeit des Autoklaven und der Reaktionstemperatur und gegebenenfalls von der Durchsatzmenge, abhängig. Für jede Versuchsbedingung gibt es somit eine minimale Reaktionszeit, die notwendig ist, um eine vollständige Umwandlung der eingesetzten Eisen(III)-verbindung zu $\gamma$-Fe$_2$O$_3$ zu gewährleisten. Da eine Verlängerung der Dauer der hydrothermalen Behandlung zu keiner wesentlichen Veränderung der entstehenden Produkte führt, wurden in den unten aufgeführten Beispielen bei diskontinuierlicher Arbeitsweise einheitliche Reaktionszeiten von vier Stunden eingehalten. In Rohrreaktoren gelten ähnliche Abhängigkeiten von Temperaturen, Verweilzeiten und Durchsatzmengen. Auf diesen Angaben können jedoch keine Beschränkungen des erfindungsgemäßen Verfahrens bezüglich der Reaktionszeiten abgeleitet werden, da es beispielsweise auch möglich ist, bei einer Behandlungsdauer von einer Minute die erfindungsgemäßen plättchenförmigen Hämatitteilchen herzustellen.

Die Aufarbeitung der Produkte nach der hydrothermalen Behandlung erfolgt in bekannter Weise durch Filtration und mehrmaligen Nachwaschen mit Wasser bis im Filtrat keine Fremdstoffe mehr nachgewiesen werden können. Die Trocknung der Produkte wird zweckmäßigerweise bei ungefähr 110 °C vorgenommen. Es lassen sich jedoch auch höhere Temperaturen anwenden, ohne daß dadurch Eigenschaften der Produkte geändert werden.

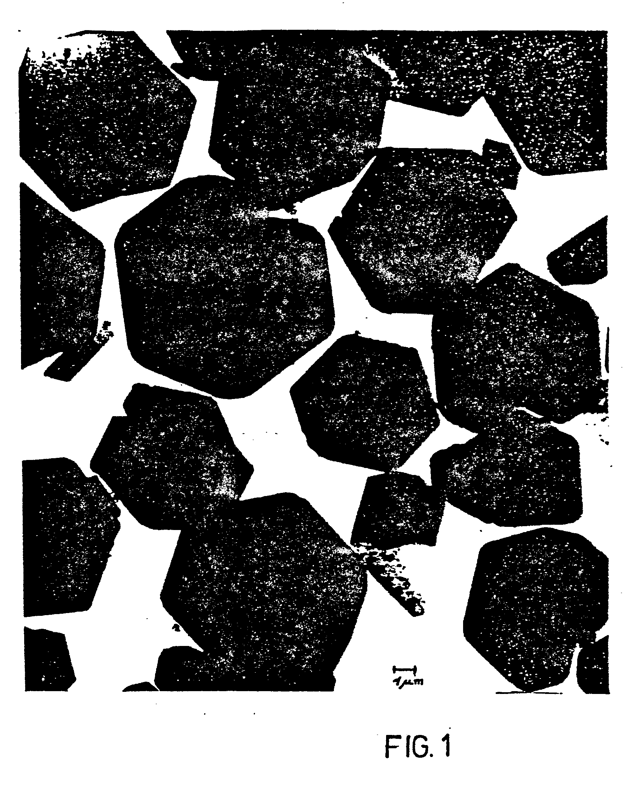

Zur Charakterisierung der Produkte in den nachfolgenden Beispielen werden eine Reihe von Meßgrößen herangezogen. Für die nach dem erfindungsgemäßen Verfahren hergestellten hexagonalen plättchenformigen Teilchen von Hämatit ist die Bestimmung der geometrischen Abmessungen von besonderer Bedeutung. Unter dem Begriff Plättchendurchmesser soll dabei der Durchmesser des Kreises verstanden werden, der die sechseckige Fläche der Kristalle umschreibt. Er kann durch Ausmessung aus elektronenmikroskopischen Aufnahmen der Teilchen bestimmt werden. Bei ausreichender Größe der Kristalle lassen sich natürlich auch lichtmikroskopische Aufnahmen verwenden. Da die Plättchendurchmesser nicht einheitlich sind, sondern eine gewisse Verteilungsbreite aufweisen, sind die in den Beispielen angegebenen Werte durch Mittelung über eine Vielzahl von Teilchen bestimmt worden. Zur Veranschaulichung ist in Fig. 1 ein Ausschnitt einer elektronenmikroskopischen Aufnahme von nach dem erfindungsgemäßen Verfahren hergestellten hexagonalen plättchenförmigen Hämatitkristallen abgebildet.

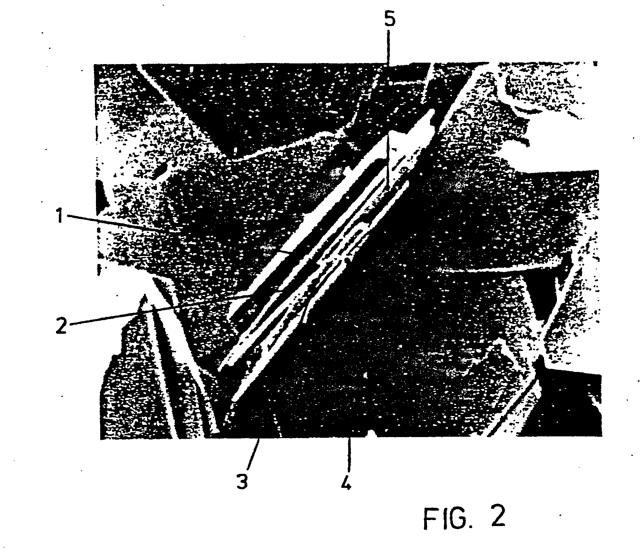

Die Plättchendicke kann durch Ausmessungen unter dem Rasterelektronenmikroskop bestimmt werden. Dabei gelangen natürlich nur die Kristalle zur Auswertung, bei denen die Flächennormale der auszumessenden Begrenzungsfläche parallel zur Blickrichtung liegt. Zur Veranschaulichung sind derartige Teilchen in Fig. 2, die eine rasterelektronenmikroskopische Aufnahme eines nach dem erfindungsgemäßen Verfahren hergestellten Eisenoxidpigmentes wiedergibt, durch die Zahlen 1 bis 5 markiert. Neben dieser Methode gibt es noch eine weitere Möglichkeit, die Plättchendicke bei porenfreien Pigmentteilchen zu bestimmen. Durch einfache geometrische Überlegungen läßt sie sich aus dem nach obigem Verfahren gemessenen Plättchendurchmesser und der BET-Oberfläche berechnen.

Eine weitere charakteristische Eigenschaft der nach dem erfindungsgemäßen Verfahren hergestellten plättchenförmigen Hämatitteilchen ist ihre im Vergleich zu herkömmlichen Produkten kleinere röntgenographische Kristallitgröße. Zweckmäßigerweise wird zu ihrer Bestimmung ein Reflex an Gitterebenen gewählt, die parallel oder zumindest annähernd parallel zu der im einzelnen Kristall als Plättchenfläche in Erscheinung tretenden (001)-Gitterebene des Hämatits (hexagonale Indizierung) liegen. Als besonders geeignet hat sich der gut auswertbare Reflex an der (104)-Gitterebene erwiesen. Die an diesem Reflex bestimmte röntgenographische Kristallitgröße steht in direkter Beziehung zur mittleren Plättchendicke der Pigmentteilchen.

Die erfindungsgemäßen Pigmente unterscheiden sich auch durch ihre Farbe in charakteristischer Weise von herkömmlichen Eisenoxidpigmenten. Sie sind durch eine vergleichsweise deutlich erhöhte Helligkeit bei gleichzeitig erniedrigtem Buntheitsbeitrag gekennzeichnet. Diese erhöhte Helligkeit, die als Folge der geringen Plättchendicke auftritt, macht sich insbesondere bei großen Teilchendurchmessern visuell durch einen schönen metallischen Glanz bemerkbar. Quantitativ lassen sich diese Farbunterschiede durch farbmetrische Messungen fassen. Zur Auswertung wurde das CIELAB-Farbsystem herangezogen, wobei im folgenden die Helligkeit mit $L^*$, die Buntheit mit $C_{ab}^*$ und der Farbwinkel mit $H^\circ$ bezeichnet werden.

Es ist bekannt, daß die Kristallgitter der Eisenoxide eine gewisse Löslichkeit für Oxide anderer Ionen, insbesondere der Elemente der III. Hauptgruppe, aufweisen. Bei herkömmlichen, aus isometrischen oder nadelförmigen Teilchen bestehenden Eisenoxiden ist diese Effekt bereits ausgenutzt worden, um ihre Eigenschaften wie beispielsweise die Farbe oder ihre magnetischen Eigenschaften zu variieren. Der Einbau von Aluminium(III) in das Hämatitgitter liefert gelbere Rotpigmente, der Einbau von Mangan(III) braune bis schwarze und der Einbau von Chrom(III) schöne echtbraune Pigmente.

Die magnetischen Eigenschaften von Magnetit- und Maghemitkristallen lassen sich in bekannter Weise durch den Einbau von Mangan-, Kobalt-, Nickel- oder Rhodiumionen beeinflussen. Insbesondere der Einbau von Kobalt wird häufig angewandt, um die Koerzitivkräfte herkömmlicher, aus isometrischen oder nadelförmigen Teilchen bestehender Magnetite oder Maghemite zu erhöhen.

Es hat sich nun gezeigt, daß auch bei der Durchführung des erfindungsgemäßen Verfahrens in

4

Gegenwart von dreiwertigen Verbindungen von Elementen, deren Kationenradien in Sauerstoffverbindungen die Koordinationszahl 6 verlangen, insbesondere der Elemente der III. Hauptgruppe, diese als Oxide in das Gitter der entstehenden hexagonalen plättchenförmigen Eisenoxide eingebaut werden. Neben Aluminium, Gallium, Indium sind bei den dreiwertigen Elementen noch Chrom, Mangan, Kobalt, Rhodium und Nickel zu erwähnen.

Die erfindungsgemäßen, plättchenförmigen Eisenoxidteilchen lassen sich prinzipiell für die gleichen Anwendungsgebiete wie herkömmliche, beispielsweise isometrische oder nadelförmige Eisenoxide einsetzen. Auf Grund ihrer plättchenförmigen Kristalltracht eröffnen sich darüberhinaus noch eine Reihe weiterer Verwendungsmöglichkeiten. So wurde für derartige Teilchen schon der Einsatz zur Pigmentierung korrosionsschützender oder dekorativer Beschichtungen mit ausgeprägtem metallischem Glanz vorgeschlagen, wobei als Beschichtungsmaterial sowohl Lacke, als auch Emails, Glasuren, Kunststoffe oder -harze in Frage kommen. Auch in Kunststoffolien oder Kunstfasern, wie sie beispielsweise für Verpackungen oder Textilien Verwendung finden, zeigen hexagonale, plättchenförmige Eisenoxide den typischen metallischen Glanz. In allen diesen Anwendungen sind natürlich auch die bekannten Eigenschaften der Eisenoxide wie Hitze-, Wetter-, UV-oder chemische Beständigkeit von großem Vorteil. Des weiteren wurde bereits gezeigt, daß sich plättchenförmige Eisenoxide hervorragend zur Herstellung von Ferriten mit der Kristallstruktur des Spinells oder Bariumhexaferrites eignen.

Bei allen genannten Anwendungsgebieten erweisen sich die erfindungsgemäßen Eisenoxide den herkömmlichen plättchenförmigen Eisenoxiden als überlegen, da die jeweils gewünschten Eigenschaften durch Einstellen bestimmter geometrischer Abmessungen, d.h. bestimmter Verhältnisse von Durchmesser zu Dicke, leicht optimierbar sind. Dieser Vorteil macht sich in besonderer Weise bei plättchenförmigen, magnetischen Eisenoxiden bemerkbar. Ihre magnetischen Eigenschaften sind in starkem Maße durch die Teilchengeometrie ihrer Hämatit-Vorläuferkristalle vorgegeben und lassen sich folglich durch das erfindungsgemäße Verfahren in weiten Grenzen variieren. Damit eröffnen sich Möglichkeiten zum Einsatz plättchenförmiger, magnetischer Eisenoxidteilchen in magnetischen Aufzeichnungsträgern wie Magnetbändern, -karten oder -platten mit einer oder mehreren magnetisierbaren Schichten. Sie können dabei in Mischungen mit herkömmlichen magnetischen Materialien verwendet werden, z.B. mit $CrO_2$, $Fe_3O_4$, $\gamma$-$Fe_2O_3$, Mischphasen von $\gamma$-$Fe_2O_3$ mit $Fe_3O_4$, $(Fe,Co)_3O_4$, $\gamma$-$(Fe,Co)_2O_3$, Mischphasen von $\gamma$-$(Fe,Co)_2O_3$ mit $(Fe,Co)_3O_4$ oder mit Oxiden starker magnetischer Anisotropie wie beispielsweise Bariumhexaferrit. Bei mehrschichtigen Aufzeichnungsträgern werden die plättchenförmigen Eisenoxide in der Unter-, Mittel- oder Oberschicht eingesetzt, die anderen Schichten enthalten eines der oben genannten herkömmlichen magnetischen Oxide mit vergleichsweise höherer, gleicher oder niedrigerer Koerzitivkraft. Es können aber auch mehrere Schichten die erfindungsgemäßen plättchenförmigen Eisenoxide enthalten, wobei sich die einzelnen Schichten dann auf Grund ihrer magnetischen Eigenschaften und/oder der räumlichen Orientierung der einzelnen Kristalle unterscheiden.

Darüberhinaus gibt es noch weitere Anwendungsgebiete für hexagonale, plättchenförmige Eisenoxide von der Kristallstruktur des Magnetits oder Maghemits, in denen die Kombination ihrer elektromagnetischen Eigenschaften mit der Kristalltracht ausgenutzt wird. Die magnetischen Wechselwirkungen führen zu einer stark ausgeprägten parallelen Orientierung der Einzelteilchen in Beschichtungsmaterialien. Im Vergleich zu herkömmlichen Eisenoxiden lassen sich folglich sehr viel höhere Packungsdichten erreichen, was sich beispielsweise in einer erhöhten korrosionsschützenden Wirkung, in einer guten Abschirmung gegen elektromagnetische Störfelder, sowie in einer hohen Leitfähigkeit äußert.

Die leichte Ausrichtbarkeit plättchenförmiger, magnetischer Teilchen in Magnetfeldern und ihr je nach Orientierung der Plättchen relativ zu einem einfallenden Lichtstrahl unterschiedliches Lichtstreuvermögen kann man sich für magneto-optische Anzeigen zunutze machen. Die Ausnutzung des Faraday. Effektes eröffnet für die erfindungsgemäßen plättchenförmigen Eisenoxide die Verwendung für magneto-optische Speicher.

Die Erfindung wird durch die nachfolgenden Ausführungsbeispiele näher erläutert :

### Beispiel 1 (Vergleichsbeispiel)

Nadelförmiges $\alpha$-FeOOH mit einer Nadellänge von 0,6 bis 0,7 $\mu$ und einem Nadeldurchmesser von 0,1 bis 0,2 $\mu$, das bei der Reduktion von Nitrobenzol mit Eisengranalien anfällt, wurde in Wasser suspendiert und mit konzentrierter Natronlauge versetzt. Die Suspension hatte danach einen Gehalt an FeOOH von 50 g/l und an NaOH von 320 g/l. 500 ml dieser Suspension wurden in ein Nickelgefäß gegeben und in einem Autoklav auf 200 °C aufgeheizt. Nach 4 Stunden war die hydrothermale Behandlung beendet und der Autoklav konnte nach Abkühlung unter 100 °C geöffnet werden. Das fertige Eisenoxid wurde durch Filtration von der Mutterlauge abgetrennt und solange mit Wasser nachgewaschen, bis das Filtrat keine alkalische Reaktion mehr zeigte. Das Produkt besteht aus gut ausgebildeten hexagonalen, plättchenförmigen Kristallen von Hämatit. Es hat einen stark blaustichigen roten Farbton und zeigt einen stumpfen metallischen Glanz.

Die Hämatitkristalle hatten einen mittleren Durchmesser von 4,44 µm und eine BET-Oberfläche von 1,3 m²/g. Daraus wurde das Verhältnis von Durchmesser zu Dicke zu 12,7 berechnet. Der $SiO_2$-Gehalt des Produktes lag bei 0,086 Gew.-%.

### Beispiel 2

Die Versuchsdurchführung entspricht Beispiel 1, jedoch wurde der Suspension vor der hydrothermalen Behandlung 0,5 g eines Natriumsilikates mit 33 % $SiO_2$ zugegeben und durch starkes Rühren gut untergemischt.

Das Produkt besteht aus gut ausgebildeten hexagonalen, plättchenförmigen Kristallen von Hämatit. Es hat einen leicht blaustichigen roten Farbton und zeigt einen ausgeprägten metallischen Glanz. Durch Ausmessung unter dem Elektronenmikroskop wurde der mittlere Durchmesser zu 4,74 µm bestimmt. Aus der BET-Oberfläche von 2,4 $m^2/g$ und dem genannten Durchmesser errechnet sich eine mittlere Plättchendicke von 0,17 µm. Daraus folgt für das Verhältnis von Durchmesser zu Dicke ein Wert von 27,8. Das Pigment hatte einen $SiO_2$-Gehalt von 0,37 Gew.-%.

### Beispiel 3

Die Versuchsdurchführung entspricht Beispiel 1, nur wurde die Menge an zugegebenem Natriumsilikat auf 0,75 g erhöht. Das anfallende Produkt hatte wieder einen ausgeprägten metallischen Glanz bei einem gelblich roten Farbton, der dem von Kupfer sehr ähnlich ist. Der mittlere Plättchendurchmesser und die Plättchendicke wurden aus elektronenmikroskopischen Aufnahmen zu 5,16 µm bzw. 0,12 µm bestimmt, woraus sich ein Verhältnis von Durchmesser zu Dicke von 43 errechnet. Der analytisch bestimmte $SiO_2$-Gehalt des Produktes lag bei 0,44 Gew.-%.

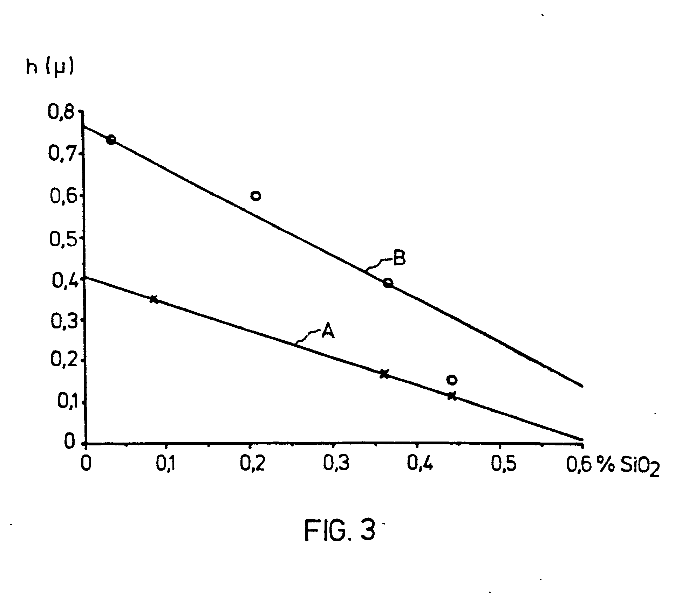

Die Abhängigkeit der Teilchendicke h vom $SiO_2$-Gehalt der Teilchen für die Beispiele 1 bis 3 ist in Kurve A der Figur 3 dargestellt. Der Durchmesser der Teilchen mit unterschiedlicher Dicke kann innerhalb der Meßgenauigkeit und Reproduktionsgenauigkeit der Experimente als nahezu konstant angenommen werden.

In der nachfolgenden Tabelle 1 sind die Farbwerte nach dem CIELAB-System angegeben.

Tabelle 1

| Beispiel | L* | C*$_{ab}$ | H° |
|---|---|---|---|
| 1 | 42,8 | 9,8 | 33,6 |
| 2 | 49,0 | 14,9 | 35,4 |
| 3 | 49,7 | 16,2 | 36,2 |

### Beispiele 4 bis 6

Es wurde ein sehr feinteiliges α-FeOOH einer mittleren Nadellänge von 0,05 µ und einem Durchmesser von 0,01 µ, wie es bei der Luftoxidation von frisch gefälltem Eisen(II)-hydroxid anfällt, mit Wasser und Natronlauge zu einer viskosen Paste angerührt. Die Suspension war danach 8 N an Alkali und enthielt 50 g FeOOH/1. Dazu wurden unterschiedliche Mengen (s. Tabelle 2) einer wäßrigen Suspension von feinteiligem $SiO_2$-Pulver (Aerosil der Fa. Degussa) unter guter Durchmischung zugegeben. Die anschließende hydrothermale Behandlung im Autoklav bei 200 °C dauerte 4 Stunden. Die entstandenen Produkte wurden in gewohnter Weise aufgearbeitet. Sie bestanden aus hexagonalen Kristallen von Hämatit, die im Fall der erfindungsgemäßen Produkte nach Beispielen 5 und 6 (Tab. 2) einen ausgeprägten metallischen Glanz zeigten. Die mittleren Teilchendurchmesser d wurden durch Ausmessung unter dem Lichtmikroskop bestimmt, die mittleren Teilchendicken h aus den BET-Oberflächen und den Teilchendurchmessern berechnet.

Tabelle 2

| Beispiel | $SiO_2$ in der Suspension (Gew.-% bez. a. Fe-Gehalt) | $SiO_2$ im fertigen Produkt (Gew.-%) | d (µm) | h (µm) | d/h | BET-Oberfl. ($m^2/g$) |
|---|---|---|---|---|---|---|
| 4 (Vergl.) | 0,05 | < 0,04 | 11,4 | 0,73 | 15,6 | 0,6 |
| 5 | 0,48 | 0,21 | 13,9 | 0,60 | 23,2 | 0,7 |
| 6 | 0,95 | 0,36 | 10,1 | 0,38 | 26,6 | 1,1 |

Die Produkte nach Beispielen 5 und 6 wiesen bei der Farbmessung gegenüber dem ohne $SiO_2$-Zusatz hergestellten Produkt nach Vergleichsbeispiel 4 eine um 2,6 bzw. 5,4 Punkte erhöhte Helligkeit L* auf. Die Abhängigkeit der Teilchendicke h von $SiO_2$-Gehalt der Teilchen für die Beispiele 4 bis 6 ist in Kurve B der Figur 3 dargestellt. Der Durchmesser der Teilchen kann innerhalb der Meßgenauigkeit und Reproduzierbarkeit der Experimente als nahezu konstant angenommen werden.

### Beispiel 7

Als Ausgangsmaterial wurde eine Aufschlämmung von $\alpha$-FeOOH, die bei der Reduktion organischer Nitroverbindungen mit siliziumhaltigen Eisen anfällt, verwendet. Der $SiO_2$-Gehalt dieser Suspension liegt bei 0,89 Gew.-%, bezogen auf den FeOOH-Gehalt. Zu der Aufschlämmung wurde eine 45 %ige Natronlauge zugegeben und gut untergemischt. Danach enthielt die Suspension 320 g/l NaOH und 130 g/l FeOOH. Die anschließende hydrothermale Behandlung wurde bei 240 °C durchgeführt und dauerte 4 Stunden. Das anfallende Produkt bestand aus glitzernden Kristallen von $\alpha$-$Fe_2O_3$, die nach Einarbeitung in Lack einen auffallenden metallischen Glanz mit einer Farbe ähnlich der von Kupferbronze zeigten. Durch Ausmessung unter dem Lichtmikroskop wurde der mittlere Durchmesser der Teilchen zu 5,1 $\mu$m bestimmt. Mit Hilfe der BET-Oberfläche von 3,0 m²/g ließ sich ein mittlere Plättchendicke von 0,15 $\mu$m und ein Verhältnis von Durchmesser zu Dicke von 34 berechnen. Der analytisch bestimmte Gehalt an $SiO_2$ betrug 0,44 Gew.-%.

Die Farbwerte betragen L* = 52,9, $C_{ab}$* = 19,4, H° = 36,5.

Die plättchenförmigen Hämatitkristalle wurden in bekannter Weise im feuchten Wasserstoffstrom bei 400 °C 30 minuten lang reduziert. Die anfallenden Magnetitkristalle zeigten die gleiche Kristalltracht wie ihre Hämatit-Vorläuferkristalle und hatten die folgenden magnetischen Pulverdaten : Koerzitivkraft 328 Oe, Remanenz 419 G cm³ g⁻¹. Mit diesem Material wurde ein Magnetband mit einer Koerzitivkraft von 352 Oe hergestellt.

### Beispiele 8 bis 10

Ein feinteiliges $\alpha$-FeOOH wurde nach den Beispielen 4-6 in Wasser suspendiert und durch Zugabe von wenig Schwefelsäure auf einen pH-Wert von 2 eingestellt. Die Feststoffkonzentration dieser Suspension lag bei 100 g/l. Anschließend wurden unterschiedliche Mengen (Tab. 3) eines feinteiligen $SiO_2$-Pulvers unter starkem Rühren zugegeben. Die Hydrothermale Behandlung der Suspension bei 220 °C dauerte 4 Stunden.

Die Aufarbeitung der anfallenden Produkte erfolgte in gewohnter Weise durch Filtration und mehrmaliges Nachwaschen. Die Produkte hatten die in Tab. 2 angegebenen Eigenschaften. Die röntgenographische Kristallitgröße wurde am (104)-Reflex des Hämatitgitters bestimmt.

### Tabelle 3

| Beispiel | SiO₂ in der Suspension (Gew.-% bez. a. Fe-Gehalt) | SiO₂ im fertigen Produkt | BET-Oberfl. (m²/g) | Kristal-litgröße (Å) |
|---|---|---|---|---|
| 8 (Vergl.) | 0,05 | < 0,04 | 4,1 | 1 600 |
| 9 | 1,0 | 0,46 | 7,1 | 1 140 |
| 10 | 1,5 | 0,71 | 10,9 | 760 |

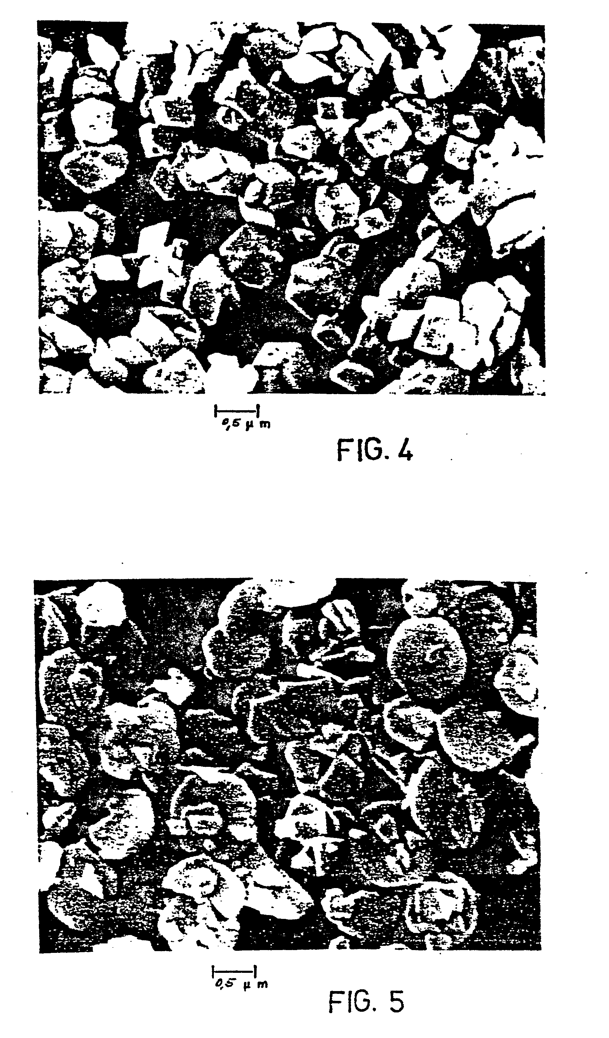

Das nach Beispiel 8 erhaltene Produkt ist in Figur 4 als rasterelektronenmikroskopische Aufnahme dargestellt ; das Produkt nach Beispiel 10 entsprechend in Figur 5. Der Einfluß des $SiO_2$ auf die Kristallgeometrie ist durch Vergleich der beiden Figuren deutlich erkennbar.

In der nachfolgenden Tabelle 4 sind die Farbmeßwerte nach dem CIELAB-Farbsystem angegeben.

### Tabelle 4

| Beispiel | L* | C*$_{ab}$ | H° |
|---|---|---|---|
| 8 | 34,3 | 24,2 | 28,8 |
| 9 | 36,4 | 23,7 | 28,1 |
| 10 | 41,6 | 27,9 | 37,6 |

### Beispiel 11

25 g $\alpha$-FeOOH aus Beispiel 1 wurden in 500 ml 8 NaOH suspendiert und zu dieser Mischung 0,25 g $GeO_2$ zugegeben. Die fertige Suspension wurde in einem Autoklav vier Stunden bei 200 °C hydrothermal behandelt. Die Versuchsdurchführung entspricht damit bis auf die Zugabe von $GeO_2$ dem Vergleichsbeispiel 1. Die anfallenden Hämatitikristalle zeigten einen ausgeprägten metallischen Glanz bei einem gelblich roten Farbton, der dem von Kupferbronze sehr ähnlich ist. Die Farbwerte betragen L*,

$C_{ab}^* = 17,8$ und $H° = 38,3$. Ein Vergleich der im CIELAB-Farbsystem gemessenen Farbwerte zeigt die weitgehende farbmetrische Übereinstimmung des Produktes mit den nach Beispiel 3 oder 7 hergestellten Proben. Die BET-Oberfläche des Produktes lag bei 2,5 m²/g.

### Beispiel 12 (Vergleichsbeispiel)

In einer wäßrigen Suspension von $\alpha$-FeOOH aus Beispiel 1, wurde durch Zugabe von wenig Schwefelsäure ein pH-Wert von 2 eingestellt. Die Feststoffkonzentration der Suspension lag danach bei 50 g/l. Von dieser Mischung wurden 500 ml in einem Autoklav vier Stunden lang bei 250 °C unter hydrothermalen Bedingungen behandelt. Das fertige Produkt wurde anschließend von der Mutterlauge abgetrennt, mit Wasser gewaschen und bei 120 °C getrocknet. Es hatte die in Tabelle 5 angegebenen Eigenschaften.

### Beispiele 13-17

Das Vergleichsbeispiel 12 wurde in allen Einzelheiten nachgearbeitet, nur wurden zu der Suspension von $\alpha$-FeOOH vor der hydrothermalen Behandlung unterschiedliche Mengen an Fremdsubstanzen zugegeben, die das Wachstums der Hämatitkristalle beeinflussen. Es wurden Zn(II)- und Ti(IV)-verbindungen in Form von $ZnSO_4$ (Beispiele 13, 14) bzw $TiOSO_4$ (Beispiele 15-17) verwendet. Die Mengen dieser Zusatzstoffe in der Suspension und im Endprodukt, sowie die Eigenschaften der nach der hydrothermalen Behandlung isolierten Hämatitproben sind in Tabelle 5 angegeben. Ähnlich wie bei $SiO_2$-Zusätzen steigen auch hier die BET-Oberflächen und die Helligkeitswerte mit der zugesetzten Menge an wachstumsbeeinflussender Substanz in der für plättchenförmige Eisenoxid typischen Weise (vergl. Tabellen 3 und 4).

### Tabelle 5

| Beispiel | Zusatz in der Suspension (Gew.% bez. a. Fe-Gehalt) | Zusatz im fertigen Produkt (Gew.-%) | BET-Oberfläche (m²/g) | L* | Farbwerte C*$_{ab}$ | H° |
|---|---|---|---|---|---|---|
| 12 (Vergl.) | — | — | 1,8 | 30,0 | 10,0 | 15,2 |
| 13 | 0,8 % $ZnSO_4$ | nicht bestimmt | 2,6 | 33,5 | 9,9 | 17,6 |
| 14 | 1,6 % $ZnSO_4$ | 0,31 % ZnO | 3,2 | 35,7 | 10,4 | 21,9 |
| 15 | 0,95 % $TiOSO_4$ | 0,30 % $TiO_2$ | 1,9 | 31,2 | 8,2 | 12,4 |
| 16 | 1,9 % $TiOSO_4$ | nicht bestimmt | 2,3 | 32,3 | 7,6 | 13,5 |
| 17 | 2,86 % $TiOSO_4$ | 0,75 % $TiO_2$ | 2,6 | 34,0 | 7,5 | 16,3 |

### Beispiel 18 (Vergleichsbeispiel)

Der Versuch wurde genau wie Beispiel 12 durchgeführt, nur erfolgte die hydrothermale Behandlung bei 300 °C. Die Eigenschaften des anfallenden Produktes sind in Tabelle 6 aufgeführt.

### Beispiele 19 und 20

Die Durchführung der Versuche entsprach Beispiel 18. Zu der Suspension von $\alpha$-FeOOH wurden jedoch zusätzlich unterschiedliche Mengen Phosphorsäure zugesetzt. Die Mengen an $H_3PO_4$ und die Eigenschaften der nach der hydrothermalen Behandlung isolierten Produkte sind in Tabelle 6 angegeben. Die Wirkung der Phosphationen auf das Kristallwachstums des Hämatits läßt sich aus den für plättchenfömiges $\alpha$-$Fe_2O_3$ typischen Farbwerten und den mit steigender Phosphatmenge steigenden BET-Oberflächen und abnehmenden Kristallitgrößen erkennen.

### Tabelle 6

| Beispiel | $H_3PO_4$ in der Suspension (Gew.-% bez. a. Fe-Gehalt) | Phosphat im fertigen Produkt (Gew.-%) | BET-Oberfläche (m²/g) | Röntgen. Kristallitgröße (Å) | L* | Farbwerte C*$_{ab}$ | H° |
|---|---|---|---|---|---|---|---|
| 18 (Vergl.) | — | — | 2,0 | > 2 000 | 29,9 | 10,7 | 15,1 |
| 19 | 0,16 | nicht best. | 3,0 | > 2 000 | 32,5 | 14,3 | 20,0 |
| 20 | 0,80 | 0,54 | 8,6 | 860 | 40,1 | 22,4 | 34,5 |

# 0 014 382

## Beispiel 21

50 g Eisenoxidhydroxid nach Beispiel 7 wurden in 0,5 l 8N NaOH suspendiert und unter starkem Rühren eine wäßrige Lösung von 5,4 g $CoSO_4$ zugetropft. Danach wurden zur Oxidation des Kobalts noch 4,5 g $K_2S_2O_8$ zugegeben und die Suspension gut durchgemischt. Die anschließende hydrothermale Behandlung erfolgte bei 240 °C und dauerte 4 h. Es wurden plättchenförmige Hämatitkristalle mit einem Kobalt(III)-gehalt von 4 Gew.-% erhalten.

Dieses Material wurde 15 Minuten bei 350 °C und dann 45 Minuten bei 370-380 °C mit feuchtem Wasserstoff reduziert. Der anfallende plättchenförmige kobalthaltige Magnetit hatte einen FeO-Gehalt von 26 % und zeigte folgende magnetische Pulverdaten : Koerzitivkraft 481 Oe, Remanenz 426 G $cm^3g^{-1}$. Durch anschließende Oxidation im Luftstrom bei 150-200 °C konnte daraus ein kobalthaltiger Magnetit mit 19 % FeO und folgenden magnetischen Pulverdaten erhalten werden : Koerzitivkraft 681 Oe,, Remanenz 433 g $cm^3 g^{-1}$. Mit diesem Material konnte ein Magnetband mit einer Koerzitivkraft von 783 Oe hergestellt werden. Der in Bandrichtung gemessene $B_r/B_s$-Wert lag wie theorethisch zu erwarten bei 0,5.

### Ansprüche

1. Hexagonale, plättchenförmige Eisenoxidteilchen mit einem Durchmesser zwischen 0,5 und 100 µm und einem Durchmesser-Dicke-Verhältnis zwischen 4 und 200, enthaltend 0,1 bis 12 Gew.-% mindestens eines der Oxide der Elemente der IV, V und/oder VI. Haupt- und/oder Nebengruppe und/oder der II. Nebengruppe des Periodensystems der Elemente.

2. Eisenoxidteilchen nach Anspruch 1, enthaltend 0,1 bis 12 Gew.-%, insbesondere 0,1 bis 9 Gew.-%, mindestens eines der Oxide der Elemente Silicium, Germanium, Zink, Titan, Zirkon oder Phosphor.

3. Eisenoxidteilchen nach Anspruch 2, enthaltend 0,1 bis 5, vorzugsweise 0,1 bis 1, insbesondere 0,2 bis 0,8 Gew.-% $SiO_2$.

4. Eisenoxidteilchen nach einem der Ansprüche 1 bis 3, enthaltend zusätzlich ein Oxid der Elemente der III. Hauptgruppe des Periodensystems.

5. Eisenoxidteilchen nach einem der Ansprüche 1 bis 4, enthaltend zusätzlich mindestens ein Oxid der Elemente Mangan, Kobalt, Nickel oder Rhodium.

6. Eisenoxidteilchen nach einem der Ansprüche 1 bis 5, in der Kristallstruktur des Hämatit.

7. Verfahren zur Herstellung von hexagonalen, plättchenförmigen Eisenoxidteilchen nach einem der Ansprüche 1 bis 6, dadurch gekennzeichnet, daß während des Wachstums der Eisenoxidteilchen oder von gleichgestaltigen Vorläuferkristallteilchen mindestens eine Verbindung von mindestens einem der Elemente der IV., V. und/oder VI. Haupt- und/oder Nebengruppe und/oder der II. Nebengruppe des Periodensystems der Elemente anwesend ist und einer hydrothermalen Behandlung bei Temperaturen oberhalb der Temperatur, bei der eben eine vollständige Umwandlung der eingesetzten Verbindung zu α-Eisenoxid erfolgt, mindestens jedoch oberhalb 100 °C, unterzogen wird, die erhaltenen plättchenförmigen Hämatitteilchen von der Reaktionssuspension abgetrennt, gewaschen und gegebenenfalls in bekannter Weise in Magnetit oder Maghemit überführt werden.

8. Verfahren nach Anspruch 7, dadurch gekennzeichnet, daß während des Wachstums der plättchenförmigen Eisenoxidteilchen mindestens eine dreiwertige Verbindung mindestens eines der Elemente Mangan, Kobalt, Nickel oder Rhodium zugegen ist.

9. Verfahren nach einem der Ansprüche 7 bis 8, dadurch gekennzeichnet, daß während des Wachstums der plättchenförmigen Eisenoxidteilchen mindestens eine Verbindung mindestens eines der Elemente Silicium, Germanium, Zink, Titan, Zirkon oder Phosphor zugegen ist.

10. Verwendung hexagonaler plättchenförmiger Eisenoxidteilchen nach einem der Ansprüche 1 bis 9 für korrosionsbeständige oder dekorative Beschichtungen, zur Einfärbung von Ferriten mit der Kristallstruktur des Spinells oder Bariumhexaferrits, für magnetische Aufzeichnungsträger, für magneto-optische Anzeigen und Speicher.

### Claims

1. Hexagonal lamellar iron oxide particles having a diameter between 0.5 and 100 µm and a diameter/thickness ratio between 4 and 200, containing 0.1 to 12 % by weight of at least one of the oxides of the elements of the IVth, Vth and/or VIth Main and/or Secondary Group and/or of the IInd Secondary Group of the Periodic System of elements.

2. Iron oxide particles according to Claim 1, containing 0.1 to 12 % by weight, in particular 0.1 to 9 % by weight, of at least one of the oxides of the elements silicon, germanium, zinc, titanium, zirconium or phosphorus.

3. Iron oxide particles according to Claim 2, containing 0.1 to 5, preferably 0.1 to 1, in particular 0.2 to 0.8 % by weight of $SiO_2$.

4. Iron oxide particles according to one of Claims 1 to 3, additionally containing one oxide of the elements of the IIIrd Main Group of the Periodic System.

5. Iron oxide particles according to one of Claims 1 to 4, additionally containing at least one oxide of the elements manganese, cobalt, nickel or rhodium.

6. Iron oxide particles according to one of Claims 1 to 5, having the crystal structure of hematite.

7. Process for the production of hexagonal, lamellar iron oxide particles according to one of Claims 1 to 6, characterised in that during the growth of the iron oxide particles or of isomorphous precursor crystal particles at least one compound of at least one of the elements of the IVth, Vth and/or VIth Main and/or Secondary Group and/or of the IInd Secondary Group of the Periodic System of elements is present and is subjected to a hydrothermal treatment at temperatures above the temperature at which the compound used is just completely converted into $\alpha$-iron oxide, but at least at above 100 °C, the lamellar hematite particles obtained are separated from the reaction suspension, washed and optionally converted into magnetite or maghemite in a known manner.

8. Process according to Claim 7, characterised in that during the growth of the lamellar iron oxide particles at least one trivalent compound of at least one of the elements manganese, cobalt, nickel or rhodium is added.

9. Process according to one of Claims 7 to 8, characterised in that during the growth of the lamellar iron oxide particles at least one compound of at least one of the elements silicon, germanium, zinc, titanium, zirconium or phosphorus is added.

10. Use of hexagonal lamellar iron oxide particles according to one of Claims 1 to 9 for corrosion-resistant or decorative coatings, for colouring ferrites having the crystal structure of spinel or barium hexaferrite, for magnetic recording supports, for magneto-optical display or storage devices.


**Revendications**

1. Particules d'oxyde de fer en lamelles hexagonales ayant un diamètre de 0,5 à 100 μm et un rapport du diamètre à l'épaisseur de 4 à 200, contenant 0,1 à 12 % en poids d'au moins l'un des oxydes des éléments du groupe principal et/ou du sous-groupe IV, V et/ou VI et/ou du sous-groupe II du Système Périodique des Éléments.

2. Particules d'oxyde de fer suivant la revendication 1, contenant 0,1 à 12 % en poids, notamment 0,1 à 9 % en poids, d'au moins l'un des oxydes des éléments silicium, germanium, zinc, titane, zirconium ou phosphore.

3. Particules d'oxyde de fer suivant la revendication 2, contenant 0,1 à 5, de préférence 0,1 à 1, notamment 0,2 à 0,8 % en poids de $SiO_2$.

4. Particules d'oxyde de fer suivant l'une des revendications 1 à 3, contenant en outre un oxyde des éléments du groupe principal III du Système Périodique.

5. Particules d'oxyde de fer suivant l'une des revendications 1 à 4, contenant en outre au moins un oxyde des éléments manganèse, cobalt, nickel ou rhodium.

6. Particules d'oxyde de fer suivant l'une des revendications 1 à 5, de la structure cristalline de l'hématite.

7. Procédé de production de particules d'oxyde de fer en lamelles hexagonales suivant l'une des revendications 1 à 6, caractérisé en ce qu'au moins un composé d'au moins l'un des éléments du groupe principal et/ou du sous-groupe IV, V et/ou VI et/ou du sous-groupe II du Système Périodique des Éléments est présent pendant la croissance des particules d'oxyde de fer ou de particules cristallines de précurseurs de même forme et est soumis à un traitement hydrothermique à des températures au-dessus desquelles s'effectue juste une transformation totale du composé utilisé en oxyde de fer alpha, mais au moins au-dessus de 100 °C, les particules en lamelles d'hématite obtenues sont séparées de la suspension réactionnelle, lavées et transformées, le cas échéant, d'une manière connue en magnétite ou en maghemite.

8. Procédé suivant la revendication 7, caractérisé en ce qu'un composé trivalent d'au moins l'un des éléments manganèse, cobalt, nickel ou rhodium est ajouté pendant la croissance des particules en lamelles d'oxyde de fer.

9. Procédé suivant l'une des revendications 7 et 8, caractérisé en ce qu'un composé d'au moins l'un des éléments silicium, germanium, zinc, titane, zirconium ou phosphorre est ajouté pendant la croissance des particules en lamelles d'oxyde de fer.

10. Utilisation de particules d'oxyde de fer en lamelles hexagonales suivant l'une des revendications 1 à 9 pour des revêtements résistant à la corrosion ou décoratifs, pour la coloration de ferrites à structure cristalline de spinelle ou d'hexaferrite de baryum, pour des supports magnétiques d'enregistrement, pour des affichages et des mémoires magnéto-optiques.

FIG. 1

FIG. 2

FIG. 3

FIG. 4

FIG. 5